# EUROPEAN PATENT SPECIFICATION

(11) **EP 2 921 936 B1**
(45) Date of publication and mention of the grant of the patent: **28.11.2018**
(21) Application number: 14461516.8
(22) Date of filing: 22.03.2014
(51) Int. Cl.: G06F 3/01, A47B 97/00, A47B 77/00

(54) **Method and apparatus for gesture control of a device**
Verfahren und Vorrichtung zur Gestensteuerung einer Vorrichtung
Procédé et appareil permettant de commander un gestion de dispositif

(43) Date of publication of application: 23.09.2015
(73) Proprietor: Monster & Devices Sp. z o.o., 01-249 Warszawa (PL)
(72) Inventor: Semegen, Mateusz, 66-010 Nowogród Bobrzanski (PL); Kowcz, Marcin, 65-176 Zielona Góra (PL); Jakubowski, Marek, 01-377 Warszawa (PL)
(74) Representative: Blonski, Pawel

(56) References cited:
- EP-A2- 1 967 941
- WO-A1-2013/038293
- DE-U1-202012 005 255
- US-A1- 2012 287 044

## Description

The present invention relates to a method and apparatus for gesture control of a device. In particular the present invention relates to controlling a set of devices capable of receiving control signals based on gestures. Preferably, such control is opening and closing of such gesture controlled devices.

Gesture control is as such inevitably related to gesture recognition. Gesture recognition is a topic in computer science and language technology with the goal of interpreting human gestures via mathematical algorithms. Gestures can originate from any bodily motion or state but commonly originate from the face or hand.

Current focuses in the field include emotion recognition from the face and hand gesture recognition. Many approaches have been made using cameras and computer vision algorithms to interpret sign language. However, the identification and recognition of posture, gait, proxemics, and human behaviors is also the subject of gesture recognition techniques (source: Wikipedia).

There are many challenges associated with the accuracy and usefulness of gesture recognition software. For image-based gesture recognition there are limitations on the equipment used and image noise. Images or video may not be under consistent lighting, or in the same location. Items in the background or distinct features of the users may make recognition more difficult (source: Wikipedia). For example, one such device is disclosed in US 20100072868 A1 entitled "Cabinet door system" wherein a system includes an automated cabinet door arrangement configured to provide selectable access to contents stored therein, comprising a plurality of cabinets. Each cabinet includes a plurality of overlapping horizontal slats. The plurality of overlapping horizontal slats further comprise an inward stair-step configuration, wherein this configuration provides vertical displacement of the horizontal slats. The system includes a touch screen interface configured to provide programmable control instructions to each cabinet and each individual horizontal slat of the automated door system.

Further, the interface may also include audio sensors and motion sensors; wherein the user uses audio control instructions to control the cabinet system. In addition, each cabinet may include a motion sensor disposed in front of each horizontal slat, wherein motion would operate and control each horizontal slat of the cabinet system.

Therefore this publication discloses opening and closing of cabinets based on input from a motion sensor or a sound sensor. A drawback of the solution is that in case of the motion sensor the user must be very close to the sensor and hence to the cabinet. Further in order for the sensors to work in an expected manner their field of detection must be narrow so as not to react to motion effected with respect to a neighboring cabinet. In case of audio sensors, different audio commands must be used in order to distinguish between multiple devices present at a given location.

In other known systems, a transfer of human action to an electrical device is performed by switches, contactors, etc. by using a touch gesture. An examplary contactors are touch detecting contactors mounted on kitchen cabinets. An impulse is transmitted from the contactor to an electric actuator and as a result it effectuates opening or closure of the respective cabinet (doors or drawers). One contactor is required per one cabinet. These systems are offered by, for example, © Blum Inc.

A prior art publication of US20120287044 entitled "Processing of gesture-based user interactions using volumetric zones" discloses systems and methods for processing gesture-based user interactions within an interactive display area. The display of one or more virtual objects and user interactions with the one or more virtual objects is further provided. Multiple interactive areas are created by partitioning an area proximate a display into multiple volumetric spaces or zones. The zones may be associated with respective user interaction capabilities. A representation of a user on the display may change as the ability of the user to interact with one or more virtual object changes.

Another prior art publication EP1967941A2 entitled "Video-based image control system" discloses a computer implemented method for controlling an application based on the determined position of a user's hand. Positions of a user's body are expressed in three dimensional coordinates relative to an image detector. A claim segmenting a torso from a hand of the user's body is defined, and a position of the hand is determined based on the defined plane.

A further prior art publication WO2013038293A1 entitled "Gesture-based user-interface with user-feedback" discloses a system having a contactless user-interface, through which a user controls a functionality of the system. The contactless user-interface has a detector sub-system and a user-feedback sub-system. The contactless user-interface has an alert mode and a control mode. In the alert mode, the user-feedback sub-system has a display monitor to provide a visible acknowledgement to the user, in response to the detector sub-system having detected the presence of the user within an alert range. The contactless user-interface transitions from the alert mode to the control mode in response to the detector sub-system detecting an initialization gesture of the user. In the control mode, the contactless user-interface controls the functionality in response to the detector subsystem detecting a control gesture of the user. The visible acknowledgement is made to mirror the movements of the user.

Yet another prior art publication DE202012005255 entitled "Control device with a gesture monitoring unit" discloses a control device, in particular for a vehicle or household appliance, with a gesture monitoring unit which is designed, to detect non-tactile gestures of a user, and an actuator unit, which is designed to operate an associated device, wherein the control device is adapted to be either in an off state in which the actuator unit is not driven, or to be in an operating state in which the actuator is operating in dependence of detecting a non-tactile actuation gesture, to drive to the associated device.

The aim of the development of the present invention is an improved and cost effective method and apparatus for gesture control of a device. In particular the aim is to make the method of control more intuitive and suitable for operating from a distance at the same time.

### SUMMARY OF THE INVENTION

The objects of the present invention are a method for gesture control of a device and a system for gesture control of a device as defined in the appended claims 1 and 10. These and other objects of the invention presented herein are accomplished by providing a method and apparatus for gesture control of a device. Further details and features of the present invention, its nature and various advantages will become more apparent from the following detailed description of the preferred embodiments shown in a drawing, in which:Fig. 1 presents a method according to the present invention;Figs. 2A - 2C present examples of zones configuration;Fig. 3 shows a method for determining zones;Fig. 4 presents an exemplary hand in an action zone; and FIG. 5 presents a system according to the present invention.

### NOTATION AND NOMENCLATURE

Some portions of the detailed description which follows are presented in terms of data processing procedures, steps or other symbolic representations of operations on data bits that can be performed on
computer memory. Therefore, a computer executing such logical steps thus requires physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.
Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.
The present invention relates to a gesture control system configured for example to control electrical components such as an electric motor, servo-drive, electric actuator or other electrical components suitable for opening and closing devices such as cupboards, wardrobes, doors, sunshades and the like.
The invention is implemented as a system allowing for control of devices with a use of gestures performed by a human operator. The gestures are associated with opening and closing of elements such as kitchen cabinets' doors, doors in general, push-pull mechanisms or the like.
In order to detect gestures, the present invention utilizes a gesture recognition sensor such as a depth sensor. Such depth sensors are often called with different names such as ranging camera, flash lidar, time-of-flight (ToF) camera or RGB-D camera.
The underlying sensing mechanisms are also equally varied: range-gated ToF, RF-modulated ToF, pulsed-light ToF, and projected-light stereo. Nevertheless, since the system according to the present invention is envisaged for everyday use and everyday devices, cost effective sensors are preferred, such as XTion Pro offered by ASUS or DS311 offered by SoftKinetic. It is sufficient for such depth sensor to cover an area of a radius of few meters.

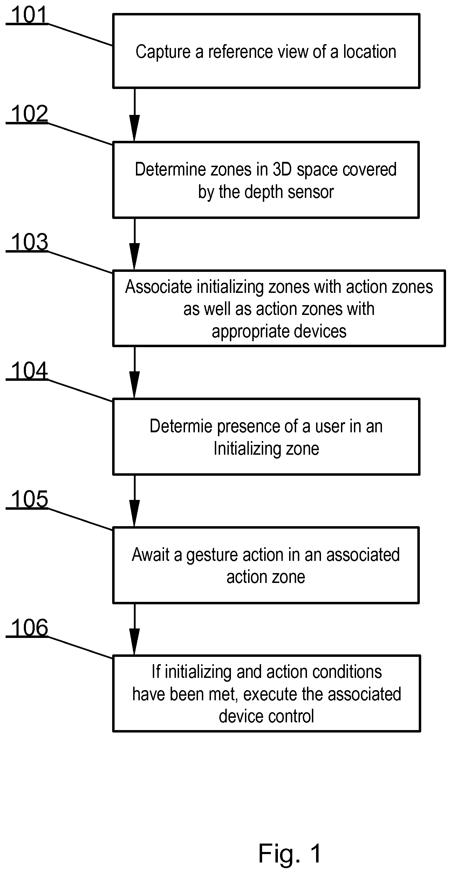

Fig. 1 presents a method according to the present invention. The method starts at step 101 from capturing a reference view of a location, which depends on placement of the depth sensor used and its field of view (coverage). A reference view is a three-dimensional depth map of, for example, a room such as a kitchen. Such reference view is useful for determining interaction zones as well as gesture recognition. Naturally, the reference view may be updated in order to take into account for example new furniture additions or removals from the given location. Such update may be automatic, executed for example periodically, or triggered by a user of the system.

Subsequently, at step 102, there are determined zones in 3D space covered by the depth sensor. A zone is preferably a cubic or a substantially cubic area located in the reference view of the locations. Shapes other than cubic are envisaged by the present invention but a cubic space is most convenient in terms of subsequent data processing.

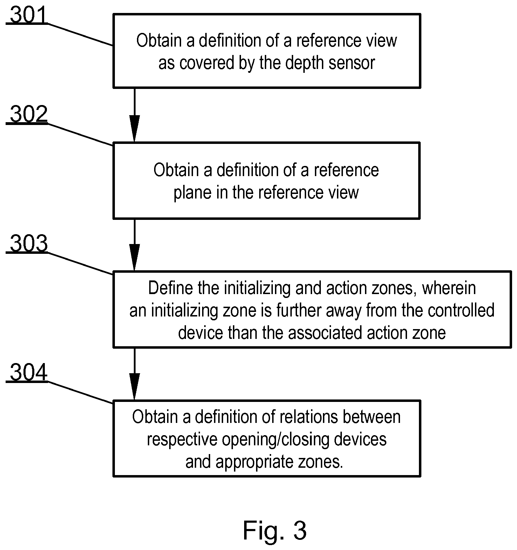

Details of the method for determining zones are provided later in the detailed description, with reference to Fig. 3.

There are two different types of zones. An initializing zone, such that when a person is detected within this zone, an event is generated notifying that the initialization has been executed. The detection of a person need not be the same as detection of a complete silhouette of such person. For example the detection may be limited to a hip area of a person.

There is also an action zone, such that when a person has already been detected in the initializing zone and a person's hand is detected in the action zone an event is generated by the respective action zone.

Preferably, the action event is generated when there is a sequence of gestures present, the sequence comprising: (a) inserting a hand in the action zone, (b) awaiting a timer threshold after conditions of step (a) have been met, and (c) withdrawing the hand from the action zone.

The action zone, preferably does not generate an action event when the hand moves out of the zone or when the initializing zone has not been previously set in an active state.

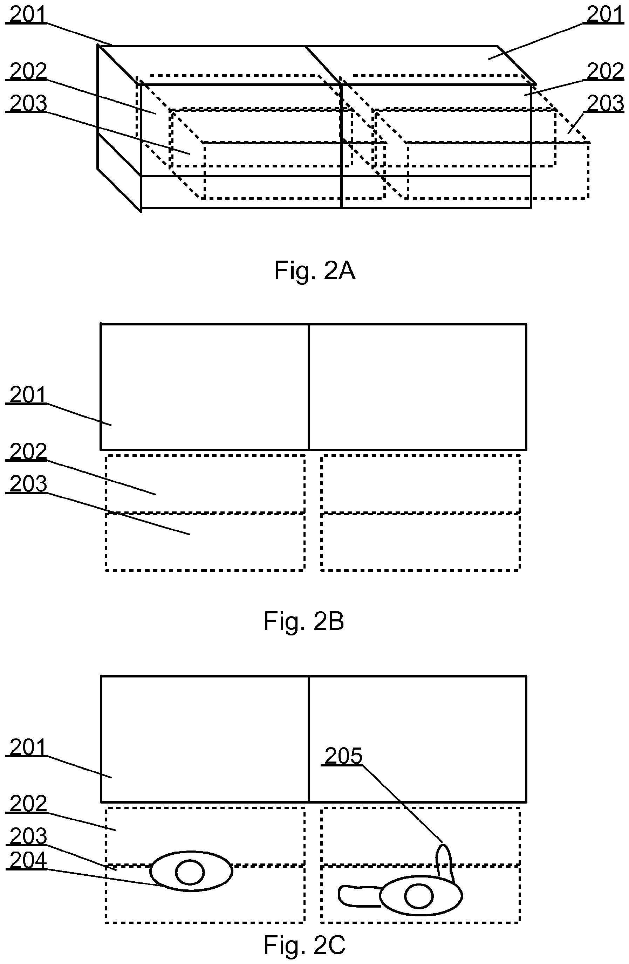

Next, at step 103, there are associated initializing zones with action zones as well as action zones with appropriate devices. Preferably, according to the present invention, there are multiple controlled devices, each of which has an associated action zone as the first zone next to the device (preferably adjacent or in proximity to the device) and an initialization zone associated with said action zone wherein the initialization zone is further away from the device than the action zone. The respective zones will be presented in details in Figs. 2A - 2C.

At step 104 of the method, there is determined whether there occurred a presence of a user in an initializing zone. As explained, there may be many initializing zones and the depth sensor may simultaneously detect a plurality of different persons in a plurality of different initializing zones. In case a presence of a user in an initializing zone has been detected, this zone generates an event and becomes an active initializing zone.

On the other hand, when a user, after activating such initializing zone, moves out of the respective initializing zone, this zone generates an event and becomes an non-active initializing zone.

At step 105 of the present method, there is executed an action of awaiting a gesture action in an associated action zone. As it has already been explained, each initializing zone has an associated action zone. When such expected gesture is detected, the respective action zone generates an event and is set to an active state.

On the other hand, when a user, after activating such action zone, moves out of the respective action zone, this zone generates an event and becomes a non-active action zone.

Lastly, at step 106 of the method, it is checked whether initializing and action conditions have been met and in case they have, there is executed the associated device control operation. This is typically achieved by generating appropriate electrical control signals.

Figs. 2A - 2C present examples of zones configuration. Fig. 2A presents a perspective view of two kitchen cabinets 201, wherein in front of the kitchen cabinet 201 there has been defined an action zone 202 and then further away from the kitchen cabinet 201 there has been defined an initializing zone 203. Each kitchen cabinet 201 that may be operated by a respective control device eg. a door opening/closing electric motor mechanism, must have its own initializing 203 and action zone 202.

Fig. 2B presents a top view of the kitchen cabinets shown in Fig. 2A, while Fig. 2C presents the same kitchen cabinets 201 in cases where a person is present in the respective initializing 203 and action zone 202.

In case of the left cabinet 201 the person 204 is present in the initializing zone 203 but does not hold out its hand and therefore a suitable drawer opening/closing device is not notified. In such case optionally, the system may inhibit notification of the associated controlled device also due to the fact that the person stands in the action zone, which may result in being hit by the opening element such as a drawer.

On the other hand, in case of the right cabinet 201, the person 204 (the main body of such person) is present in the initializing zone 203 and the person 204 does hold out only its hand 205 into the associated action zone and therefore, as a result, a suitable drawer opening/closing device is notified and shall executed an action of opening the drawer.

A method for determining operational zones has been depicted in Fig. 3. At step 301 there is obtained a definition of a reference view as covered by the depth sensor. This may simple by an area scan provided by the aforementioned depth sensor itself.
Subsequently, at step 302, there is obtained a definition of a reference plane in the reference view, for example such reference plane is a kitchen floor. The reference plane may be defined automatically or by a human operator provided with appropriate system configuration software.
The reference plane allows for easier setting of respective zones and allow the operation of methods for detecting humans and gestures. The default zones are preferably perpendicular to the reference plane (typically to the floor). Optionally, the zones may be adjusted with respect to their orientation and their shape as well.
At step 303, there are defined the initializing and action zones, wherein an initializing zone is further away from the controlled device than the associated action zone. A single action zone may be assigned to more than one device, for example two or more kitchen drawers will open/close based on a single gesture.
Then, at step 304, there is obtained a definition of relations between respective opening/closing devices and appropriate zones. A given action zone may have more than one associated opening/closing device (controlled devices). For example, in case of a heavy kitchen drawer a group of servo motors may be applied. Typically, an opening device will be separate from a closing device, therefore both devices must be associated with a particular action zone, preferably including action type definition - open/close.

The respective associated action zone and the initializing zone do not overlap. However, in an alternative example, the initializing zones may overlap and in some particular examples the initializing zones must overlap. For example, in case there are two kitchen cabinets, that implement the method according to the present invention and are positioned next to each other, a user may stand in front of the right of the kitchen cabinets (in its associated initializing zone) and make a pointing gesture towards the left kitchen cabinet. In such case an action associated with the action zone of the left kitchen cabinet will not be executed because the initializing zone of left kitchen cabinet is inactive. In case when the initializing zone of the left kitchen cabinet and the right kitchen cabinet overlap or partially overlap (at the location where the user is standing), both initializing zones will be activated and the aforementioned action in the action zone of the left kitchen cabinet will be executed as expected.

The overlapping of the initializing zones does not influence other steps of the method i.e. each initializing zone has its associated action zone and each action zone has its associated one or more controlled devices.
Preferably, the respective action zones do not overlap when the respective initializing zones overlap or partially overlap.

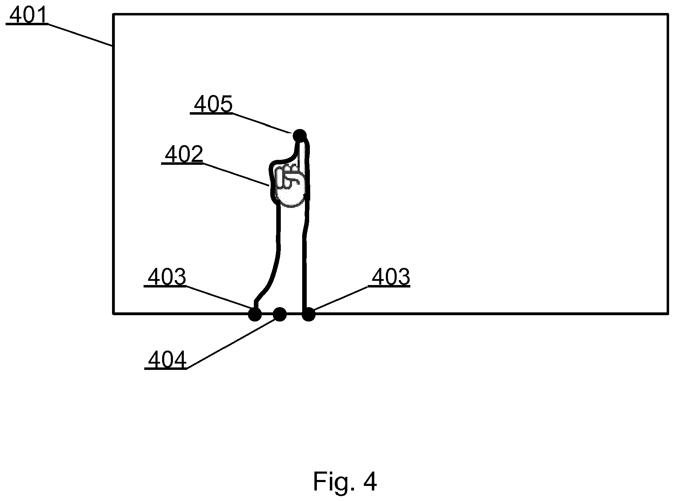

Fig. 4 presents an exemplary human hand in an action zone. The hand is detected preferably in the following preferred manner. There is taken into account only the active action zone i.e. there is a person present in the associated initializing zone. An analysis in the action zone is executed only in relation to points in three-dimensional space that belong to the person present in the initializing zone (due to this approach an opening drawer will not interfere with system operation; accordingly small objects that may be present in the action zone will not interfere with system operation).
The analysis, according to the present invention, is executed for a top view (even if the depth sensor is located at an angle) calculated based on the previously determined reference plane.
In Fig. 4 such an exemplary top view is depicted. The action zone 401 comprises an object outline 402 obtained based on the points in three-dimensional space that belong to the person present in the initializing zone (at this stage it is not known whether a hand is present in the action zone). The 402 outline is preferably generated with one of suitable two dimensional image analysis algorithms available in prior art (for example a suitable algorithm of this type may be found in an Open Computer Vision Library (OpenCV - www.opencv.org)). Such outline 402 is in principle a set of extreme points of an object. Preferably, the extreme points of special interest are the points located at the edge of the action zone 403.

There is calculated an average coordinate of such points 403 thereby arriving at location of point 404. The furthest point 405 from the average point 404 is assumed to be a tip of a hand, for example a pointing finger. Based on its movements, gestures are detected. The distance between points 404 and 405 may be taken into account in order to discard small objects.

Based on the outline 402, it is also detected whether the object defining the outline is a hand. In case a person or its part is located in an action zone, the detected outline 402 will not match a reference outline pattern and the action will not be executed.

An action of opening or closing may be performed not only in response to a gesture but also in response to a presence of a hand in the respective action zone, i.e. pointing at a kitchen drawer for example.

According to the present invention there is not any possibility that a user's hand present in an action zone points an inappropriate controlled device. Typically, when a hand is detected in an action zone it will be sufficient to control the associated device. In case the system recognizes gestures, a gesture recognition system will then preferably monitor movement of the tip of the hand.

Monitoring movement of the tip of the hand is sufficient as the best gesture types in the present application is a pointing gesture. During gesture processing the method may apply appropriate filtering of insignificant movements that are frequently reported for example due to instability of the hand in space. In such cases a so called bounding box may be used to stabilized hand detection as well as processing of an average position in a plurality of captured readings from the depth sensor 508.

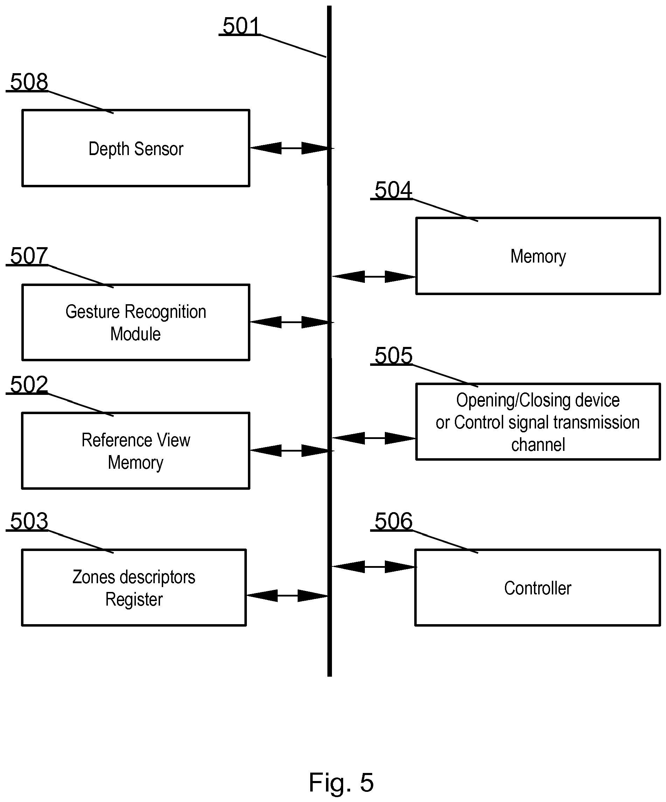

FIG. 5 presents a system according to the present invention. The system may be realized using dedicated components or custom made FPGA or ASIC circuits. The system comprises a data bus 501 communicatively coupled to a memory 504. The memory may for example store output data received from a depth sensor 508 and also store computer programs executed by a controller 506.

Additionally, other components of the system, according to the present invention, are communicatively coupled to the system bus 501 so that they may be managed by the main controller 506.

The system comprises the depth sensor 508 (in general it is a gesture capturing and recognition sensor capable of capturing a three-dimensional gesture) that are appropriately supplied with power and controlled by the controller 506. Similarly, the system comprises a gesture recognition module 507, which is appropriately supplied with power and controlled by the controller 506. The gesture recognition module 507 operates according to a gesture recognition method, for example such as defined with reference to Fig. 4. The gesture recognition is based on input from the gesture recognition sensor 508.

An additional component of the system according to the present invention is a reference view memory 502. As already explained, the task of this circuit is to store a three-dimensional scan, created with a use of the output from the depth sensor 508, of a location where there are not any human operators present (the scanned location is devoid of any human operator).

A further circuit of the system according to the present invention is a zones descriptors register circuit 503, which is configured to store information related to the aforementioned definitions of the initializing and action zones as well as associations between the respective initializing/action zones and the respective opening/closing devices.

Lastly, the system comprises an opening/closing device or a control signal transmission channel 505 which allows for providing a signal driving the opening/closing device (the controlled device in general), for example doors, drawers or rollers or providing a control signal for such driving means. As already explained, the system may comprise a plurality of opening/closing devices 505 or suitably selectively control such devices by appropriate control signals.
The present invention also relates to a kitchen cabinet comprising the system according to the present invention. In such a kitchen cabinet the depth sensor may be suitably positioned so as to scan the location while the remaining modules of the system may be placed in a single casing, preferably hidden such that a user will not see it.
The depth sensor is communicatively coupled to the system. It is understood that the connection between the depth sensor and the reminder of the system may be either wired (such as RS232, UART, I2C or USB) or wireless (such as WiFi, Bluetooth or RF).

Compared to prior art products, the present invention speeds up the kitchen, and also enables avoiding finger marks on surfaces of kitchen furnitures as in case of systems with touch sensors.
Moreover, gesture controlled systems may operate in clean rooms where any touch must be avoided, for example in hospital operating rooms.
As an optional feature the opening/closing devices has a position sensor which allows the system to be aware of a physical state of the controlled devices. For example in case a person wishes to open a drawer, an appropriate gesture is presented, the system sends a signal to open but the drawer does not fully open, typically because it is too heavy. A typical response of the person would be to present the opening gesture again, however the system may interpret the gesture as a closing gesture, because an opening gesture has been previously given. A position sensor will allow to take such situations into account and for example issue a further opening signal.
Due to use of a position sensor such erroneous situation may be avoided. An action may be executed after obtaining a current state of the opening/closing device and based on that state and the received gesture an appropriate instructions are executed subsequently.
As yet another optional feature, parental control feature may be implemented in the present invention. The parental control may be as simple as verifying person's height in order not to allow opening by children. As another option, persons may be more accurately recognized based on features such as size of hand, body, head etc. Such size characteristics are easily obtainable using the already applied depth sensor.
It can be easily recognized, by one skilled in the art, that the aforementioned method for gesture control of a device may be performed and/or controlled by one or more computer programs. Such computer programs are typically executed by utilizing the computing resources in a computing device such as personal computers, personal digital assistants, cellular telephones, dedicated controllers or the like. Applications are stored on a non-transitory medium. An example of a non-transitory medium is a non-volatile memory, for example a flash memory or volatile memory, for example RAM. The computer instructions are executed by a processor. These memories are exemplary recording media for storing computer programs comprising computer-executable instructions performing all the steps of the computer-implemented method according the technical concept presented herein.
While the invention presented herein has been depicted, described, and has been defined with reference to particular preferred embodiments, such references and examples of implementation in the foregoing specification do not imply any limitation on the invention as defined by the appended independent claims. It will, however, be evident that various modifications and changes may be made thereto. The presented preferred embodiments are exemplary only, and are not exhaustive of the scope of the technical concept presented herein.
Accordingly, the scope of protection is not limited to the preferred embodiments described in the specification, but is only limited by the claims that follow.

## Claims

1. Computer-implemented method for gesture control of a device, using a gesture recognition sensor (508) having a given coverage area, the device comprising an electric opening and closing mechanism under control, the method comprising the steps of:
• recognizing a gesture using said gesture recognition sensor (508) having a given coverage area;
• controlling the device based on said recognized gesture;
the method being **characterized in that** it further comprises the steps of:
• defining (102, 303) an initializing zone (203) in the area covered by the gesture recognitior sensor;
• defining (102, 303) an action zone (202) in the area covered by the gesture recognition sensor, wherein said action zone and the initializing zone are arranged in a nonoverlapping manner;
• associating (103, 304) said initializing zone with said action zone and said action zone with said controlled device;
• wherein the associated action zone is the first zone located in proximity to the controlled device and its associated initializing zone is located further away from the controlled device than the action zone;
• detecting (104) a person within the initializing zone and generating an event notifying that the initialization has been executed;
• detecting (105) the person's gesture in the action zone and generating an action event by respective action zone;
• sending (106) a control signal to the controlled device's electric opening and closing mechanism when both the initialization has been executed and said action event has been generated, and inhibiting notification of the controlled device's electric opening and closing mechanism if the person stands in the action zone.

2. The method according to claim 1 wherein the action zone (202) is defined adjacent to the controlled device.

3. The method according to claim 1 wherein the gesture recognition sensor (508) is a depth sensor.

4. The method according to claim 1 wherein the action zone (202) is in proximity to the associated initializing zone (203).

5. The method according to claim 1 wherein the action zone (202) or the initializing zone (203) is a cubic or substantially cubic area located in a reference view of a location covered by the gesture recognition sensor.

6. The method according to claim 1 wherein the action event is generated when there is a sequence of gestures present, the sequence comprising: (a) inserting a hand in the action zone (202), (b) awaiting a timer threshold after conditions of step (a) have been met, and (c) withdrawing the hand from the action zone.

7. The method according to claim 1 wherein the respective initializing (203) and the action zone (202) are perpendicular to a reference plane.

8. The method according to claim 1 wherein the method further comprises the step of, prior to generation of the action event, verifying person's height in order exclude control of said device by children.

9. The method according to claim 1 wherein the action zone (202) has more than one associated controlled device.

10. System for gesture control of a device comprising an electric opening and closing mechanism under control, the system comprising a data bus (501) communicatively coupled to a memory (504) and a controller (506), the system further comprising:
• a gesture recognition sensor (508);
• a gesture recognition module (507) configured to operate according to a gesture recognition method based on input from the gesture recognition sensor (508);
• a reference view memory (502) configured to store a three-dimensional scan, created with a use of the output from the depth sensor, of a location devoid of any human operator;
• a zones descriptors register circuit (503) configured to store information related to definitions of at least one initializing zone (203) and at least one action zone (202) as well as association between the respective initializing and action zones and the controlled device;
• a control signal transmission channel (505) configured to provide a signal driving the controlled device;
• wherein the controller (506) is configured to execute the steps of the method defined in claim 1.

11. A kitchen cabinet comprising the system according to claim 10.

12. A computer program comprising program code means for performing all steps of the computer-implemented method according to claim 1 when said program is run on a system according to claim 10.

13. A computer readable medium storing computer-executable instructions performing all steps of the computer-implemented method according to claim 1 when executed on a system according to claim 10.

## Patentansprüche

1. Computerimplementiertes Verfahren zur Gestensteuerung einer Vorrichtung unter Verwendung eines Gestenerkennungssensors (508), der einen gegebenen Deckungsbereich hat, die Vorrichtung umfassend einen elektrischen Öffnungs- und Schließmechanismus, der gesteuert wird, das Verfahren umfassend die folgenden Schritte:
• Erkennen einer Geste unter Verwendung des Gestenerkennungssensors (508) mit einem gegebenen Deckungsbereich;
• Steuern der Vorrichtung beruhend auf der erkannten Geste;
wobei das Verfahren **dadurch gekennzeichnet ist, dass** es ferner die folgenden Schritte umfasst:
• Definieren (102, 303) einer Initialisierungszone (203) in dem vom Gestenerkennungssensor abgedeckten Bereich;
• Definieren (102, 303) einer Aktionszone (202) im vom Gestenerkennungssensor abgedeckten Bereich, wobei die Aktionszone und die Initialisierungszone auf eine nicht überlappende Weise angeordnet sind;
• Assoziieren (103, 304) der Initialisierungszone mit der Aktionszone und der Aktionszone mit der gesteuerten Vorrichtung;
• wobei die assoziierte Aktionszone die erste Zone ist, die sich in der Nähe der gesteuerten Vorrichtung befindet, und deren assoziierte Initialisierungszone sich weiter weg von der gesteuerten Vorrichtung befindet als die Aktionszone;
• Erfassen (104) einer Person in der Initialisierungszone und Erzeugen eines Ereignisses zum Benachrichtigen, dass die Initialisierung ausgeführt worden ist;
• Erfassen (105) einer Geste der Person in der Aktionszone und Erzeugen eines Aktionsereignisses durch die jeweilige Aktionszone;
• Senden (106) eines Steuersignals an den elektrischen Öffnungs- und Schließmechanismus der gesteuerten Vorrichtung, wenn die Initialisierung ausgeführt und das Aktionsereignis erzeugt worden ist,
und Sperren einer Benachrichtigung des elektrischen Öffnungs- und Schließmechanismus der gesteuerten Vorrichtung, wenn die Person in der Aktionszone steht.

2. Verfahren nach Anspruch 1, wobei die Aktionszone (202) anliegend an der gesteuerten Vorrichtung definiert ist.

3. Verfahren nach Anspruch 1 wobei der Gestenerkennungssensor (508) ein Tiefensensor ist.

4. Verfahren nach Anspruch 1, wobei die Aktionszone (202) in der Nähe der assoziierten Initialisierungszone (203) ist.

5. Verfahren nach Anspruch 1, wobei die Aktionszone (202) oder die Initialisierungszone (203) ein kubischer oder im Wesentlichen kubischer Bereich ist, der sich in einer Referenzsicht einer Stelle befindet, die vom Gestenerkennungssensor abgedeckt ist.

6. Verfahren nach Anspruch 1, wobei das Aktionsereignis erzeugt wird, wenn eine Abfolge von Gesten vorliegt, die Abfolge umfassend: (a) Einführen einer Hand in die Aktionszone (202),
(b) Abwarten eines Zeitschalter-Schwellenwerts, nachdem die Bedingungen von Schritt (a) erfüllt wurden, und (c) Zurückziehen der Hand aus der Aktionszone.

7. Verfahren nach Anspruch 1, wobei das jeweilige Initialisieren (203) und die Aktionszone (202) senkrecht zu einer Referenzebene sind.

8. Verfahren nach Anspruch 1, wobei das Verfahren vor Erzeugen des Aktionsereignisses ferner den Schritt eines Überprüfens der Größe einer Person umfasst, um eine Steuerung der Vorrichtung durch Kinder auszuschließen.

9. Verfahren nach Anspruch 1, wobei die Aktionszone (202) mehr als eine assoziierte gesteuerte Vorrichtung hat.

10. System zur Gestensteuerung einer Vorrichtung, umfassend einen elektrischen Öffnungs- und Schließmechanismus, der gesteuert wird, das System umfassend einen Datenbus (501), der kommunikativ mit einem Speicher (504) und einer Steuereinheit (506) gekoppelt ist, das System ferner umfassend:
• einen Gestenerkennungssensor (508);
• ein Gestenerkennungsmodul (507), das konfiguriert ist, um gemäß einem Gestenerkennungsverfahren beruhend auf einem Eingang von dem Gestenerkennungssensor (508) betrieben zu werden;
• einen Referenzsichtspeicher (502), der konfiguriert ist, um einen dreidimensionalen Scan zu speichern, der mit der Verwendung des Ausgangs von dem Tiefensensor von einer Stelle ohne einen menschlichen Anwender erstellt wurde;
• einen Zonendeskriptor-Registerkreis (503), der konfiguriert ist, um Informationen in Bezug auf Definitionen von mindestens einer Initialisierungszone (203) und mindestens einer Aktionszone (202), sowie eine Assoziation zwischen der jeweiligen Initialisierungs- und Aktionszone und der gesteuerten Vorrichtung zu speichern;
• einen Steuersignal-Übertragungskanal (505), der konfiguriert ist, um ein Signal bereitzustellen, das die gesteuerte Vorrichtung regelt;
• wobei die Steuereinheit (506) konfiguriert ist, um, die Schritte des in Anspruch 1 definierten Verfahrens auszuführen.

11. Küchenschrank, umfassend das System nach Anspruch 10.

12. Computerprogramm umfassend Programmcode-Mittel zum Ausführen aller Schritte des computerimplementierten Verfahrens nach Anspruch 1, wenn das Programm auf einem System nach Anspruch 10 ausgeführt wird.

13. Computerlesbares Medium zum Speichern von computerausführbaren Anweisungen, die alle Schritte des computerimplementierten Verfahrens nach Anspruch 1 ausführen, wenn sie auf einem System nach Anspruch 10 ausgeführt werden.

## Revendications

1. Procédé informatique pour la commande gestuelle d'un dispositif, utilisant un capteur de reconnaissance de geste (508) possédant une zone de couverture donnée, le dispositif comprenant un mécanisme électrique d'ouverture et de fermeture contrôlé, le procédé comprenant les étapes :
• de reconnaissance d'un geste à l'aide dudit capteur de reconnaissance de geste (508) possédant une zone de couverture donnée ;
• de commande du dispositif en fonction dudit geste reconnu ;
le procédé étant **caractérisé en ce qu'**elle comprend, en outre, les étapes :
• de définition (102, 303) d'une zone d'initialisation (203) dans la zone couverte par le capteur de reconnaissance de geste ;
• de définition (102, 303) d'une zone d'action (202) dans la zone couverte par le capteur de reconnaissance de geste, la zone d'action et la zone d'initialisation étant agencées de façon à ne pas se chevaucher ;
• d'association (103, 304) de ladite zone d'initialisation avec ladite zone d'action, et de ladite zone d'action avec ledit dispositif contrôlé ;
• la zone d'action associée étant la première zone située à proximité du dispositif contrôlé, et sa zone d'initialisation connexe étant plus éloignée du dispositif contrôlé que la zone d'action ;
• de détection (104) d'une personne au sein de la zone d'initialisation, et la génération d'un événement communiquant que l'initialisation a été exécutée ;
• de détection (105) du geste de la personne dans la zone d'action, et de génération d'un événement d'action par la zone d'action connexe ;
• d'envoi (106) d'un signal de commande au mécanisme électrique d'ouverture et de fermeture du dispositif contrôlé lorsque l'initialisation a été exécutée et ledit événement d'action a été généré, et
d'inhibition de la notification du mécanisme électrique d'ouverture et de fermeture du dispositif contrôlé si la personne se tient dans la zone d'action.

2. Procédé selon la revendication 1, la zone d'action (202) étant définie adjacente au dispositif contrôlé.

3. Procédé selon la revendication 1, le capteur de reconnaissance de geste (508) étant un capteur de profondeur.

4. Procédé selon la revendication 1, la zone d'action (202) se trouvant à proximité de la zone d'initialisation connexe (203).

5. Procédé selon la revendication 1, la zone d'action (202) ou la zone d'initialisation (203) étant une zone cubique, ou substantiellement cubique, située dans une vue de référence d'un lieu couvert par le capteur de reconnaissance de geste.

6. Procédé selon la revendication 1, la zone d'action étant générée lorsqu'une séquence de gestes est présente, la séquence comprenant : (a) l'insertion d'une main dans la zone d'action (202),
(b) l'attente d'un seuil de minuterie lorsque les conditions de l'étape (a) sont remplies, et
(c) l'extraction de la main de la zone d'action.

7. Procédé selon la revendication 1, la zone d'initialisation (203) et la zone d'action (202) connexes étant perpendiculaires à un plan de référence.

8. Procédé selon la revendication 1, le procédé comprenant en outre, préalablement à la génération de l'événement d'action, l'étape de vérification de la taille de la personne, afin d'exclure la commande dudit dispositif par des enfants.

9. Procédé selon la revendication 1, la zone d'action (202) possédant plus d'un dispositif contrôlé connexe.

10. Système de commande gestuelle d'un dispositif comprenant un mécanisme électrique d'ouverture et de fermeture contrôlé, le système comprenant un bus de données (501) couplé en communication à une mémoire (504) et à un contrôleur (506), le système comprenant en outre :
• un capteur de reconnaissance de geste (508) ;
• un module de reconnaissance de geste (507) configuré pour fonctionner conformément à un procédé de reconnaissance de geste basé sur une entrée par le capteur de reconnaissance de geste (508) ;
• une mémoire de vue de référence (502) configurée pour stocker un balayage tridimensionnel, créée avec une utilisation de la sortie du capteur de profondeur, d'un lieu dépourvu de tout opérateur humain ;
• un circuit de registre de descripteurs de zones (503) configuré pour stocker des informations relatives à des définitions d'au moins une zone d'initialisation (203) et au moins une zone d'action (202), ainsi qu'une association entre les zones d'initialisation et d'action connexes et le dispositif contrôlé ;
• un canal de transmission de signal de commande (505) configuré pour émettre un signal entraînant le dispositif contrôlé ;
• le contrôleur (506) étant configuré pour exécuter les étapes du procédé défini dans la revendication 1.

11. Placard de cuisine comprenant le système selon la revendication 10.

12. Programme informatique comprenant un dispositif à code de programme pour l'exécution de toutes les étapes du procédé informatique selon la revendication 1, lors de l'utilisation dudit programme sur un système selon la revendication 10.

13. Support lisible par ordinateur stockant des instructions exécutables par ordinateur exécutant toutes les étapes du procédé informatique selon la revendication 1 lors de l'exécution sur un système selon la revendication 10.
